(19) Europäisches Patentamt
European Patent Office
Office européen des brevets

(11) **EP 3 367 811 B1**

(12) **EUROPEAN PATENT SPECIFICATION**

(45) Date of publication and mention
of the grant of the patent:
**31.07.2019 Bulletin 2019/31**

(51) Int Cl.:
*A23G 1/30* *(2006.01)*  *A23G 1/36* *(2006.01)*
*A23G 3/34* *(2006.01)*  *A23G 3/40* *(2006.01)*
*A23D 7/005* *(2006.01)*  *A23D 7/05* *(2006.01)*

(21) Application number: **16794129.3**

(22) Date of filing: **26.10.2016**

(86) International application number:
**PCT/US2016/058799**

(87) International publication number:
**WO 2017/075010 (04.05.2017 Gazette 2017/18)**

(54) **EMULSION AND PROCESS FOR MAKING SAME**

EMULSION UND VERFAHREN ZUR HERSTELLUNG DAVON

ÉMULSION ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.10.2015 EP 15191490**

(43) Date of publication of application:
**05.09.2018 Bulletin 2018/36**

(73) Proprietor: **Cargill, Incorporated
Wayzata, MN 55391 (US)**

(72) Inventors:
• **DE CLERCQ, Nathalie
B-9860 Oosterzele (BE)**
• **DE PAEPE, Jeroen
B-9620 Zottegem (BE)**
• **HUIZENGA, Ellen
B-1800 Vlvoorde (BE)**

(74) Representative: **Fox, Charlotte
Forresters IP LLP
Skygarden
Erika-Mann-Strasse 11
80636 München (DE)**

(56) References cited:
**EP-A1- 1 875 810      EP-A2- 0 397 247
WO-A1-2012/041523      WO-A1-2015/132206
US-A1- 2007 048 431**

**Description**

FIELD OF THE INVENTION

The present invention relates to an emulsion of an aqueous phase in a lipid phase wherein non-fatty cocoa solids and/or non-fatty milk solids are present in the lipid phase and wherein the emulsion has an improved pick-up behaviour. The present invention further relates to a process for making such an emulsion, and to food products comprising the same.

BACKGROUND

Chocolate products contain significant amounts of both sugar and fat and are therefore rich in calories. In particular, chocolate products are used in chilled and frozen confectionery and desserts as coating layers or inclusion. It is an ongoing objective in the chocolate industry to provide chocolate products with reduced fat content and/or reduced calories. One approach has been to add water to chocolate products by forming emulsions with cocoa butter. Unfortunately, the preparation of such water-containing chocolate products is a difficult task: technologies that are currently available tend to have a negative impact on taste, texture, processability, pick-up, stability and/or shelf-life of the water-containing chocolate products. Even when only small amounts of water are added, this causes perceivable rheological changes in the product, usually accompanied by lumping and/or granulation and a coarse unacceptable mouth-feel. The addition of larger quantities of water, usually in the form of fresh cream or full cream milk, results in the production of "ganache" which is conventionally used as a short shelf-life filling for truffles or as a topping for confections and which is not suitable for use as a coating material. Ganache is the confectioner's term for a phase-inverted (i.e. oil-in-water) chocolate preparation and has a softer eating texture than normal chocolate and does not have the sought-after snap of traditional chocolate when broken.

US-A-5468509 describes a milk chocolate containing 1-16% water in which the chocolate preparation is produced by mixing cocoa butter with cocoa ingredients in the presence of an edible emulsifier, so that the ingredients are thoroughly coated with cocoa butter. The mixture is then blended with an aqueous phase prepared separately by mixing water, sweetener and milk solids to give a uniform mixture without resulting in high viscosity. The mixing is kept to a minimum speed to avoid exposing the cocoa solids in the cocoa butter to the water, whilst still producing a uniform mixture. If the cocoa solids in the cocoa butter are exposed to water, undesirable high viscosities such as gum formation and lumps of the mixed products as well as separation of the mixed products would result. Unfortunately, this slow mixing also results in an unstable product, with large water droplets, susceptible to phase separation, an undesirable mouth-feel and a much reduced shelf-life.

WO01/95737 discloses a process to overcome the fragility of the water-in-oil emulsion: a water-in-oil emulsion is prepared using equal parts of water and cocoa butter. Dark chocolate prepared by conventional methods including a conching step is then melted and added to the emulsion. This results in dark chocolate containing 10% water. A fat suspension of milk powder is subsequently added, leading to a milk chocolate containing 8% water and 23% fat, in a first embodiment. In a second embodiment, the milk chocolate contains 17% water and 30% fat. The resulting suspension is mouldable and demouldable and can therefore be used to produce chocolate bars. However, no other sugar is added than the sugar present in the dark chocolate. Thus, the overall sugar content is reduced by 30 to 50% relative to conventional chocolate. The cocoa content is however not substantially changed. This would result in an undesirably bitter chocolate taste, not suitable for use with indulgent feed products such as ice-cream.

US6174555 discloses water-containing soft coating chocolate products for use in ice-cream confectionery. To maintain a good texture even at the extreme temperatures of a frozen product, water-in-oil emulsions are produced with vegetable oils and then added to a melted chocolate product. Thus, the resulting product will in fact have a higher fat content, a poor "snap" at room temperature and, because of the vegetable oil content, cannot be labeled as chocolate.

US2006/0121164 discloses chocolate products based on oil-in-water suspensions. These will inherently suffer from a number of drawbacks including reduced stability (compared to products based on water-in-oil suspensions), a dependency on structuring agents (to structure and sufficiently solidify the aqueous phase) and an undesirable texture and mouth-feel. In particular, it would be very difficult, if not impossible, to use the claimed technology to make chocolate products with a desirable "snap".

EP1875810 and WO2012041523 also disclose water-in-oil emulsions that are used as coatings for frozen confections.

An additional issue, in particular for chocolate compositions used for coating of frozen desserts, is the relatively poor pick up behavior of chocolate compositions comprising water. Pick-up behavior means the amount, homogeneity and uniformity of the chocolate coating layer on the coated product after coating. Pick-up problems may translate in a too fine or too thick coating layer and/or in an irregular, non-homogeneous, non-uniform coating layer, lack of chocolate around the wood insert stick, pinholes on the chocolate layer and the like.

There is therefore still a need in the market for improved emulsion-based chocolate products with a reduced fat content and/or reduced calories. In particular there is a need to provide stable chocolate emulsion products which are suitable for coating food products due to improved pick-up behaviour. The present invention addresses this need.

STATEMENTS OF THE INVENTION

In a first aspect of present invention, there is provided an emulsion of an aqueous phase in a lipid phase, wherein the lipid phase comprises non-fatty cocoa and/or milk solids, and the aqueous phase comprises a sweetener composition and is dispersed throughout the lipid phase in the form of droplets, the lipid phase comprising lipids that have been tempered and wherein the emulsion has an improved pick-up behaviour.
In a further aspect of the present invention, there is provided a food product comprising the above emulsion together with one or more further ingredients.
In another aspect of the present invention, there is provided a process to produce an emulsion of an aqueous phase in a lipid phase, and an emulsion obtainable thereby, comprising the steps of: (a) providing an aqueous phase; (b) emulsifying the aqueous phase with a lipid phase such that the aqueous phase is dispersed throughout the lipid phase in the form of droplets, and (c) cooling the emulsion obtained in step (b), wherein the lipid phase of the emulsion comprises non-fatty cocoa solids and/or non-fatty milk solids and lipids that have been tempered and the aqueous phase comprises a sweetener composition and wherein the emulsion has an improved pick-up behaviour.

DETAILED DESCRIPTION

The present invention relates to an emulsion of an aqueous phase in a lipid phase, wherein the lipid phase comprises non-fatty cocoa and/or milk solids, and the aqueous phase comprises a sweetener composition and is dispersed throughout the lipid phase in the form of droplets, wherein the lipid phase comprises lipids that have been tempered and wherein the emulsion has an improved pick-up behaviour.

Emulsion

The term "emulsion" as used herein refers to an emulsion of an aqueous phase in a lipid phase, i.e. a water-in-oil type emulsion. The aqueous phase is the dispersed phase of the emulsion and the lipid phase is the continuous phase of the emulsion. Characteristics and composition of both the aqueous phase and the lipid phase are described in more detail below.
The emulsion will preferably have a hard texture (also referred to as a "snappy texture" - i.e. producing a good "snap" when broken), especially at cold temperatures. Hardness is measured according to the Method 1, described below, at -18°C. The hardness of the emulsion of the present invention will preferably be of 3000 g or higher, more preferably of 4000 to 20 000 g, more preferably of 5000 to 18 000 g, more preferably of 7000 to 16 000 g, even more preferably of 10 000 to 15 000 g.
As noted above, the emulsion comprises an aqueous and a lipid phase. The aqueous phase will preferably be present in an amount of 10 to 70wt%, preferably 20 to 65wt%, more preferably 30 to 60wt%, even more preferably 40 to 50wt%, based on the total weight of the emulsion. The lipid phase will preferably be present in an amount of 30 to 90wt%, preferably 35 to 80wt%, more preferably from 40 to 70wt%, even more preferably from 50 to 60wt%, based on the total weight of the emulsion. For example, the emulsion will comprise approximately 68% by weight aqueous phase and 32% by weight lipid phase. The emulsion may also comprise one or more additional ingredients such as emulsifiers, stabilisers, flavouring agents and inclusions.
Suitable emulsifiers include polyglycerol polyricinoleate (PGPR), lecithin, sugar esters, emulsifying waxes, polyglycerol fatty acid esters, polysorbates, sorban tristearates (STSs), monoglycerides, diglycerides, ammonium phosphatide, acid esters of monoacylglycerol, acid esters of diacylglycerol, and any possible combinations of two or more thereof. Preferably, the emulsifier will comprise or consist of PGPR. Alternatively, preference will be given to so-called "higher melting emulsifiers". These are emulsifiers that have a higher melting point (or lower iodine value) than standard emulsifiers such as lecithin. Preferably, the emulsifier will have an iodine value below 20. Examples of suitable higher melting point emulsifiers include monoglycerides, diglycerides and STS. Emulsifiers will preferably be present in an amount of 0.5 to 5wt%, preferably 0.5 to 3wt%, more preferably 0.5 to 1wt%, based on the total weight of the emulsion.
Other ingredients may include, for example, nuts, nut bits, almonds, almond bits, puffed rice, wheat or corn flakes, biscuit, biscuit pieces, fruit, fruit pieces, sugar crystals, flavoured sugar crystals, caramels, coconut pieces, marzipan, flavoured creams (such as mint, strawberry or orange creams), nougat, candies or candy pieces, and other typical inclusions well known to the skilled person.

Lipid phase

The lipid phase comprises lipids, preferably in crystalline form, together with one or more non-fatty solids. The lipids used in the lipid phase will be selected by a skilled person depending on the nature of the emulsion being produced and its intended end use. They will preferably be selected from the group consisting of: cocoa butter, modified cocoa butter, such as for example hydrogenated cocoa butter, or cocoa butter fractions, cocoa butter alternatives (such as cocoa butter equivalents, cocoa butter substitutes or cocoa butter replacers), anhydrous milk fat, and mixtures of two or more thereof. Cocoa butter alternatives may include, for instance, hydrogenated and non-hydrogenated vegetable fats such as palm or coconut oil, interesterified palm or coconut oil, and palm or coconut oil fractions, cocoa butter improvers. A suitable modified cocoa butter could include, for example, an interesterified cocoa butter and/or a cocoa butter fraction (e.g. fractionated cocoa butter stearins, whether produced from natural cocoa butter or interesterified cocoa butter). Preferably, the lipids will be selected from cocoa butter (preferably unmodified), anhydrous milk fat and mixtures thereof.

Preference will be given to lipids or lipid compositions resulting in a higher level of hardness. Indeed, lipids and lipid compositions having a higher hardness will provide greater stability and better snap to the final emulsion. Thus, the hardness of the lipids used in the emulsion of the present invention, measured at -18°C according to the process of Method 1, will preferably be of 3000 g or higher, more preferably of 4000 to 20 000 g, more preferably of 5000 to 18 000 g, more preferably of 7000 to 16 000 g, even more preferably of 10 000 to 15 000 g. Examples of suitable lipids include tempered fats, fractionated fats (i.e. stearin or super-stearin fractions), interesterified fats (preferably enzymatically interesterified fats), and blends thereof, whether from cocoa beans, other vegetable sources, or milk. Preference will be given, in particular, to fats with a slip melting point above 30°C, more preferably above 35°C, more preferably above 37°C, more preferably above 40°C. These may include cocoa butter lipids such as cocoa butter stearins, interesterified cocoa butter fractions, and tempered cocoa butters or cocoa butter fractions, hard milk fat fractions (with a higher stearin content than standard milk fat), cocoa butter alternatives with higher melting points (e.g. from palm, palm kernel, or coconut) and fractions and/or interesterified fractions thereof, and blends of two of more thereof, whether in the presence or absence of other fats, such as standard cocoa butter. In any event, the lipids will be capable of forming a substantially crystalline lipid phase around droplets of the aqueous phase, especially at -18°C.

According to the invention, tempered fats, especially tempered cocoa butter, are used. Tempering is a process used in the production of chocolate to achieve hardness, good mold release, and improved resistance to blooming. It involves cycles of heating and cooling the chocolate composition to ensure the formation of the largest possible number stable fat crystals (e.g. cocoa butter polymorph V). The ideal temperature cycle will be readily identified by a person skilled in the art depending on the composition being tempered and the targeted end use. For ice-cream coatings, inclusions and fillings (or other frozen end uses), a skilled person would not expect to perform tempering at all. Indeed, bloom (principally an effect of certain fatty acids becoming liquid and migrating to the surface of the chocolate product at higher temperatures) will not be an issue at -18°C. What's more, mold release will not be a critical feature of a chocolate product used as a coating or inclusion/filling. In fact, too much contraction of the chocolate upon cooling would be expected to be problematic for a coating composition. Finally, increasing the hardness or thickness of a coating chocolate would be expected to result in poor pick-up behaviour (i.e. a too brittle and/or too thick coating of chocolate). It has surprisingly been found, however, that tempered fats lead to a significantly improved pick-up behaviour when used in the compositions of the present invention, imparting both improved hardness and thickness compared to the same compositions prepared with untempered fats. Thus, the lipid phase of the compositions of the present invention will preferably comprise tempered fats, more preferably tempered cocoa butter. Advantageously, the lipid phase will consisted of tempered fats, preferably it will consist of tempered cocoa butter.

The non-fatty solids dispersed throughout the lipid phase will preferably be selected from non-fatty cocoa solids, non-fatty milk solids and mixtures thereof. They may be present in an amount of from 5 to 40wt%, preferably from 10 to 40wt%, more preferably from 15 to 40wt%, even more preferably from 20 to 35wt%, yet even more preferably from 25 to 30wt% based on the total weight of the lipid phase.

The term "non-fatty cocoa solids" as used herein refers to the non-fatty components of the cocoa nibs. For the purposes of the present invention, they may include full fat, low fat or defatted cocoa powder, cocoa liquor or mixtures thereof.

Similarly, non-fatty milk solids are any milk solids apart from milk fat. They may be provided in the form of full fat, low fat or defatted milk powder, concentrated milk or hydrated milk powder.

The lipid phase may comprise one or more additional ingredients dispersed therein. They may include, for instance, whey proteins and/or soy milk proteins, flavouring agents (such as vanilla or vanillin), and, possibly, sweeteners. Preferably, however, the sweetener will principally be provided in the aqueous phase.

Aqueous phase

The aqueous phase is formed from an aqueous composition dispersed throughout the lipid phase in the form of droplets. The aqueous composition will typically be a water-based composition (including for example milk-based compositions or fruit juice based compositions) and will comprise a sweetener composition to impart sweetness to the emulsion.

The sweetener composition may comprise any type of sweetener. Thus, for example, the sweetener may be selected from the group consisting of: sugars, amorphous sweeteners, polyols, high intensity sweeteners and mixtures thereof. Any sugar, such as a monosaccharide or a disaccharide, can be used. Examples include sucrose, fructose, and glucose - which can be provided in crystalline, powder or liquid form or in the form, for instance, of concentrated fruit juices or fruit syrups. Examples of amorphous sweeteners include honey, agave syrup, maple syrup and/or molasses. Examples of suitable polyols include maltitol, sorbitol, erythritol, lactitol, xylitol and/or mannitol. Examples of high intensity sweeteners include aspartame, sucralose, stevia-based sweeteners (such as Truvia®, Eversweet®) and the like. Of course, any combination of the above sweeteners may also be used. For example, in order to reduce the caloric value of the chocolate product, a mixture of a polyol and sugar may be used.

The amount of sweetener included in the aqueous phase will be determined by a person skilled in the art depending on the desired sweetness of the emulsion and its intended end use, together with the type of sweetener or sweeteners being used. Sweeteners such as sucrose, fructose, glucose, honey, maple syrup, molasses, polyols and the like are preferably included in the aqueous phase in an amount of from 65 to 90wt%, more preferably from 67 to 90wt%, even more preferably from 70 to 85wt%, yet more preferably from 75 to 80wt%, based on the total weight of the aqueous phase. Other sweeteners, such as high-intensity sweeteners or fruit juices/syrups, will preferably be used in an amount sufficient to give a sweetness corresponding to a content of from 65 to 90wt% crystalline sugar.

The sweetener composition may be present in the aqueous composition in any form. For example, it may be dissolved, partially dissolved, dispersed or suspended in the aqueous composition. Preferably, it will be at least partially dissolved.

Including the sweetener composition in the aqueous phase has a number of advantages. For example, the cooling effect typically associated with polyols such as erythritol or xylitol can be limited or avoided by pre-dissolving them in the aqueous composition prior to incorporation in the chocolate product. Similarly, processing difficulties typically observed when trying to incorporate viscous sweeteners such as honey can be avoided as they too can be pre-dissolved in the aqueous composition.

In addition to the sweetener composition, the aqueous composition may comprise other ingredients such as flavouring agents, nutraceuticals (such antioxidants, vitamins, and/or minerals), fruit juice or fruit juice concentrates. The aqueous composition may also comprise a milk product. The milk product may be a defatted, low fat or full fat milk product, preferably selected from the group consisting of: milk itself, dehydrated or partially dehydrated milk (e.g. evaporated or sweetened condensed milk), milk powder, cream, soy milk products, almond milk products, rice milk products, coconut milk product, hemp milk products and the like and mixtures of two or more thereof. Advantageously, the milk product will be a skimmed milk product. Where milk itself is used, it may be used in combination with water to form the aqueous composition or it may be used alone (i.e. without water).

The aqueous composition is present in the emulsion in the form of an aqueous phase dispersed throughout the lipid phase in the form of droplets. The droplets will preferably be small in size. Advantageously they will have an average diameter of no more than 30μm, preferably of no more than 20μm, more preferably of no more than 15μm. According to certain embodiments, the droplets may have an average diameter as small as 0.1μm, 0.5μm or 1μm. According to one possible embodiment, the droplets will have an average diameter of 2-15μm, preferably of 5-15μm. This small droplet size is preferably achieved by high shear mixing during emulsification process.

The emulsion of the present invention will preferably be a chocolate or chocolate compound product and will be particularly suitable for use as a coating, filling, or inclusion in different types of food products.

The emulsion of the present invention has an improved pick-up behaviour. Improved pick up behaviour can be obtained by applying one or more of the below.

The emulsion of the present invention may be characterized in that it has an increased crystallisation speed. For this purpose, the present invention may be characterized in that the lipid phase comprises a crystallization starter. The crystallisation starter, or crystallisation enhancer, preferably increases the crystallisation speed of the emulsion at temperatures from 50°C to -18°C. The emulsion of the present invention may comprise one or more crystallisation starters.

Examples of suitable crystallisation starters are high melting triacylglycerols (with an iodine value of less than 20), partial acylglycerols, waxes, fractionated oils (such as fractionated palm oil, fractionated coconut oil), interesterified oils (such as interesterified palm oil, interesterified coconut oil), hydrogenated oils, mixtures of two or more thereof and the like.

The crystallisation starter may be present in the emulsion in an amount of from 0.1 to 5wt%, preferably from 0.5 to 3wt%, more preferably from 0.5 to 2.5wt%, even more preferably from 0.5 to 1wt% based on the weight of the emulsion.

The pick-up behaviour of the emulsion may also be improved by modifying the rheology of the emulsion. For example, the ratio between the volumes of the water phase and the lipid phase of the first emulsion as obtained after step b1 of the process (as described below) is controlled. Said ratio may be from 0.2:0.8 to 0.8:0.2, preferably about 0.6:0.2.

Alternatively, or preferably, the ratio between the weight of the first emulsion, as obtained after step b1 of the process (as described below), and the cocoa mass is controlled. Said ratio may be from 3:1 to 20:1.

Alternatively, or preferably, the content of the non-fatty cocoa solids in the cocoa mass (non-fatty cocoa solids in cocoa butter or cocoa butter replacer for example) is controlled. Preferably said content is from 25:75 to 40:60, such as about 45:55 or 46:54.

Alternatively, or preferably, the particle size of the aqueous phase is controlled. Preferably, the aqueous phase will have a particle size of from $0.1\mu m$ to $5\mu m$.

Alternatively, or preferably, the emulsifier will be selected from so-called "higher melting emulsifiers" as defined above. Emulsifiers will preferably be present in an amount of 0.5 to 5wt%, preferably 0.5 to 3wt%, more preferably 0.5 to 1wt%, based on the total weight of the emulsion.

Further it has been found that by providing an aqueous phase and a lipid phase with similar viscosities also improves the rheology of the emulsion of the present invention, and increases the ability of the lipid phase and the aqueous phase to be mixed.

Food product

The present invention provides a food product comprising an emulsion as defined above together with one or more further ingredients. Preferably, the food product will be a frozen food product. A frozen food product, for the purpose of the present invention, is one that is chilled to and stored at a temperature below 0°C, preferably at a temperature between 0°C and -40°C, more preferably between -4°C and -30°C, more preferably between -10°C and -20°C, even more preferably between -15°C and -20°C. Advantageously, it will be one that is consumed in its frozen state such as ice-cream or sorbet, or other frozen confections (referred to herein as "ice cream products").

The emulsion may be used, for example, as a coating, filling and/or inclusion in the food product. Preferably, the emulsion is used as a coating of the food product.

As used herein, "coating" means one or more layers encasing a food product - whether fully or only in part (i.e. present only on part of the food product, such as a layer deposited on top or on one or more surface of the food product). Typically a coating layer has a thickness of from 0.5mm to 5mm, more preferably from 1mm to 5mm, even more preferably from 1mm to 3mm, yet more preferably from 1mm to 2mm, most preferably from 1mm to 1.5mm. Any suitable coating method known in the art can be used to obtain a food product coated with the emulsion of the present invention, including enrobing, dipping, water fall or curtain, showering or bottoming.

When used as a filling, the emulsion of the present invention will be fully or partially encased by the food product. The filling can be one or more continuous fillings or layers, or it can be present as smaller particulate filling dispersed throughout the food product, e.g. in the form of chunks, chips, or flakes (also referred to as "inclusions"). Any method known in the art can be used to include the emulsion of the present invention as a filing in a food product. For example, the emulsion may be mixed into the food product in particulate form or it may be injected into the food product.

Thus, by way of example, the emulsions of the present invention may be used as inclusions in stracciatella-type or "chocolate-chip" scoopable ice cream products, as coatings for ice-cream products provided on a stick, or as coatings and/or fillings for cone - type ice cream products.

Preferably, coating is done with the emulsion having a temperature of from 40 to 45°C.

Process

The invention further relates to a process for the production of an emulsion of an aqueous phase in a lipid phase comprising the steps of:

(a) providing an aqueous phase;
(b) emulsifying the aqueous phase with a lipid phase such that the aqueous phase is dispersed throughout the lipid phase in the form of droplets, and
(c) cooling the emulsion obtained in step (b),

wherein the lipid phase of the emulsion comprises non-fatty cocoa solids and/or non-fatty milk solids and lipids that have been tempered and the aqueous phase comprises a sweetener composition and wherein the emulsion has an improved pick-up behaviour.

The improved pick-up behaviour can be obtained by using a tempered lipid phase (i.e. a lipid phase comprising or consisting of tempered fats, preferably tempered cocoa butter), by adding a crystallisation starter to the emulsion or by modifying the rheology of the emulsion as explained above.

The terms "emulsion", "aqueous phase", "lipid phase", "crystallisation starter", etc., are as defined above.

Preferably, step (b) will be performed in a two-step process, comprising a first step (b1) in which a first lipid composition and the aqueous composition are mixed under medium to high shear to produce a first emulsion, and a second step (b2) in which a second lipid composition is added to the first emulsion and mixed under medium to low shear to produce the final emulsion. Between the first and second mixing steps, the first emulsion may be cooled, advantageously until it reaches a temperature of from 15 to 35°C, preferably from 20 to 32°C, more preferably from 25 to 31°C. It has been found that this two-step addition of the lipid phase, under different shear rates, has the advantage of producing an emulsion that is more stable (i.e. with reduced water migration outside the emulsion over time) and snappier/harder, with reduced brittleness and elasticity, in particular under cold to freezing temperatures (e.g. at -18°C), compared to an emulsion produced in a single step. When using such a two-step emulsification process, the non-fatty cocoa and/or milk solids will preferably be added to the emulsion as part of the second lipid composition (i.e. in step b2).

When a crystallisation starter is added, it may be added in the first lipid composition of step b1 and/or in the second lipid composition of step b2 and/or may be added to the first emulsion before adding the second lipid composition of step b2.

Preferably the first lipid composition added in step b1 will represent 20 to 85wt%, more preferably 30 to 80wt%, more preferably 40 to 75wt%, even more preferably 50 to 70wt%, yet more preferably from 55 to 65wt% of the total lipid composition forming the lipid phase in the final emulsion.

Emulsifiers, as described above, may be added to the emulsion in step b1 and/or step b2. In order to influence the rheology of the emulsion, the emulsifier may be added to the lipid of the lipid phase or to the non-fatty solids such as the cocoa mass when present.

The aqueous phase and the lipid phase will advantageously be emulsified at a temperature of from 40 to 65°C, more preferably from 45 to 60°C, even more preferably from 50 to 60°C. Preferably, both the aqueous phase and the lipid phase will be pre-heated before emulsification at above mentioned temperatures. The aqueous phase will preferably be heated to a temperature of from 40 to 70°C, more preferably 45 to 65°C, even more preferably from 50 to 60°C before emulsification. The lipid phase will preferably be heated to a temperature of from 40 to 65°C, more preferably from 45 to 60°C, even more preferably from 50 to 60°C before emulsification.

Emulsification of step b1 will be performed until a homogenous first emulsion is obtained, i.e. until the aqueous phase is dispersed as droplets throughout the lipid phase, said droplets preferably having a particle size as described above. Typically the emulsification time will be from 1 to 60minutes, more preferably from 1 to 30minutes, even more preferably from 1 to 20minutes, yet more preferably from 1 to 10minutes, most preferably from 2 to 5minutes.

It is preferably performed under medium to high shear, more preferably under high shear. Medium shear means a shear of 3000 to 5000rpm. High shear means a shear of above 5000rpm, preferably of 6000rpm of higher, more preferably of 7000rpm or higher, even more preferably of 10000rpm and higher, yet more preferably from 10000rpm to 20000rpm. Thus step b1 is preferably performed at a shear of from 5000rpm to 20000rpm, more preferably from 7000rpm to 15000rpm, even more preferably from 10000rpm to 15000rpm.

Step b1 can be done in any suitable equipment able to provide high shear as mentioned above and preferably able to keep the temperature of the phases relatively constant during emulsification. The aqueous phase and the lipid phase may be added together into the equipment before emulsification starts; alternatively, one or both of the phases can be added progressively to during mixing. Emulsifier may be added to one or both phases prior to emulsification or it may be added during the one or more emulsification steps.

In step b2, the second lipid composition is added under medium to low shear to the first emulsion formed in step b1. Step b2 can be performed with any suitable type of equipment providing the required medium to low shear. Medium shear means a shear of 3000 to 5000rpm. Low shear means a shear below 3000rpm. Thus preferably step b2 is performed at a shear of 3000rpm to 1000rpm, preferably of 3000rpm to 2000rpm, more preferably of 3000rpm to 2500rpm. As noted above, the second lipid composition may comprise the non-fatty cocoa solids and/or non-fatty milk solids. Preferably, therefore, the second lipid composition will comprise enough lipids to substantially coat all the non-fatty solids and form a homogeneous mixture.

Ideally, the final emulsion obtained in step b2 will be cooled, in step c, to a storage temperature of between -40°C and 0°C, preferably between -30°C and -4°C, more preferably between -20°C and -10°C, even more preferably between -20°C and -15°C, for example at about -18°C.

The present invention further relates to an emulsion obtained by the process of the present invention. It has been found that an emulsion produced according to the process of the present invention has improved dipping and pick-up behaviour, and is most suitable for use as coating composition for food products, in particular for ice cream products.

Method 1: Hardness measurement method

TA.XT Plus texture analyser is used with 4mm stainless steel probe with flat bottom (SMS/P4). The test mode is set on compression mode, the test speed is set at 0.5mm/sec and the distance of penetration is set at 10mm. 20g of sample is poured into a cup with diameter 6cm. The cup is put in the freezer at -18°C overnight. The cup is taken out of the freezer and measured within 5 minutes. Hardness is expressed in grams.

Pick up behaviour

Coating uniformity is determined visually and an overall impression of the regularity of the coating surface is given. A uniform coating has a surface with low to no irregularities while a non-uniform coating has a surface with an increased amount of irregularities.

Coating homogeneity can be determined for ice cream stick products, as follows:

$$\%\text{homogeneity} = 1 - \left(\frac{\Delta \text{thickness (between to and bottom layer)}}{\text{mean thickness}}\right).100$$

Preferably the emulsion has a homogeneity of from 70 to 100%, preferably from 80% to 100%, more preferably from 80 to 90%.

Pick up: The emulsion is heated to 40°C and kept at this temperature in a double jacketed recipient. The product to be coated is weighed (Weight of naked product). The product is then coated by dipping it for 3 seconds in the emulsion. After coating, the coated product is put in the freezer for 4 hours at -8°C. The frozen coated product is weighed (Weight of coated product). Pick up % is determined as follows:

$$\% \text{ pick up} = \frac{\text{Weight of coated product} - \text{Weight of naked product}}{\text{Weight of coated product}}$$

Preferably, the emulsion has a pick-up of from 25 to 35%, even more preferably from 25 to 30%.

Pick up is correlated with the flow behaviour of the emulsion which can be quantified by the Casson yield stress and Casson viscosity of the emulsion. The flow behaviour of the chocolate is measured by the ICA-Method 46 - 2000 - Viscosity of Cocoa and Chocolate Products using a rheometer RM200 (Lamy Rheology Instruments, Champagne au Mont d'Or, France). It is a shear-rate imposed rheometer whereby its speed ranges from 0.3 to 1500rpm and the torque from 0.05 to 30 mNm. The temperature of the measuring cell is kept at 40°C. A small amount of chocolate is brought into the tube. After a pre-shearing the chocolate for 10 min at 5s-1, a stepped flow procedure is applied by increasing and decreasing the shear rate while measuring the shear stress. The Casson model was used to define Casson Yield stress and Casson Viscosity for recipes with a fat content below 38%. For recipes with a fat content higher than 38% a polynomial model is used.

Preferably the emulsion of the present invention has a Casson Yield stress value of from 0.5 to 10 Pa, preferably of from 0.5 to 5 Pa and a Casson viscosity of from 0.5 to 2 Pa.s, preferably of from 0.5 to 1 Pa.s.

Certain embodiments of the present invention will now be illustrated in the following, non-limiting, examples.

EXAMPLES

**Example 1 (not according to the invention) : emulsion process, use of crystallisation starter**

The equipment used for emulsification is Esco-Labor, type EL-3 PM. The operating temperature of the water bath and screen of the Esco-Labor is put at 50°C. The list of ingredients used can be found in table 1 below.

The cocoa butter '1', the emulsifier and the crystallisation starter are heated until 40°C, blended in the Esco-Labor with the scraper of the Esco-Labor set at 80 RPM, to form a lipid phase. In a recipient, the water is heated up to 60°C and the sugar is added and dissolved to form the aqueous phase. The aqueous phase is added to the above lipid phase (addition time 1 minute) in the Esco-Labor and blended under high shear, at 10000RPM during 1 minute; simultaneously the scraper is applied for 1 minute at 80RPM. Mixing under high shear is continued during 30 seconds then shear is progressively reduced until low shear of 3000RPM is reached. The cocoa liquor is added and mixed for 1 minute at 3000RPM, simultaneously; the scraper is applied for 1 minute at 80rpm. The emulsion is recovered and stored at different temperatures, 4°C, -12°C, -18°C and -25°C.

Table 1 - Ingredients

| Ingredient | % |
| --- | --- |
| Cocoa liquor (Cargill, 54wt% cocoa butter) | 18 |
| Cocoa butter '1' (Cargill) | 20.6 |
| Crystalline table sugar | 39.6 |
| Water | 20 |
| PGPR | 1 |
| Crystallisation starter (Tristearin) | 0.8 |

Pick up measurement.

10 ice creams on a stick are coated with the emulsion as described in the pick-up measurement method above. Pick up behaviour is determined. Coating uniformity: the coating formed was equal and smooth over the whole surface of the ice cream stick. Pick up: the average pick up of 10 samples is 25%.

**Example 2 (not according to the invention): comparative example, lipid phase added in one step**

The ingredients and amounts are the same as in example 1, table 1. The operating temperature of the water bath and screen of the Esco-Labor is put at 50°C. The cocoa butter '1', cocoa liquor and emulsifier are heated until 40°C, blended in the Esco-Labor with the scraper of the Esco-Labor set at 80 RPM, to form the lipid phase. In a recipient, the water is heated up to 60°C and the sugar is added and dissolved to form the aqueous phase. The aqueous phase is added (1 minute addition time) to the lipid phase in the Esco-Labor and blended under high shear, at 10000RPM during 1 minute; simultaneously the scraper is applied for 1 minute at 80RPM.

Pick up measurement.

10 ice creams on a stick are coated with the emulsion as described in the pick-up measurement method above. Pick up behaviour is determined. Coating uniformity: the coating formed was not equal and not smooth over the whole surface of the ice creams stick. Pick up: the average pick up of 10 samples is 40%.

**Claims**

1.  An emulsion of an aqueous phase in a lipid phase, with an improved pick-up behaviour, wherein the lipid phase comprises non-fatty cocoa and/or milk solids, and the aqueous phase comprises a sweetener composition and is dispersed throughout the lipid phase in the form of droplets, **characterized in that** the lipid phase comprises lipids that have been tempered.

2.  The emulsion according to claim 1, further **characterized in that** the lipid phase comprises a crystallisation starter.

3.  The emulsion according to claim 2, **characterized in that** the crystallisation starter is chosen from high melting triacylglycerols, partial acylglycerols, waxes, fractionated oils, interesterified oils, hydrogenated oils and mixtures thereof.

4.  The emulsion according to any one of claims 1 to 3, **characterised in that** the lipid phase comprises lipids that have been fractionated and/or interesterified, preferably interesterified cocoa butter stearin fractions.

5.  The emulsion according to any one of claims 1 to 4, **characterised in that** the lipid phase comprises tempered cocoa butter.

6.  The emulsion according to any one of the preceding claims, **characterized in that** it comprises:

    • From 10 to 70wt% of aqueous phase, based on the total weight of the emulsion,

• From 30 to 90wt% of lipid phase, based on the total weight of the emulsion.

7.  A food product comprising the emulsion of any one of claims 1 to 6 and further food ingredients.

8.  The food product according to claim 7, **characterized in that** the emulsion is present as a coating of and/or as a filling in said food product.

9.  The food product according to claim 7 or claim 8, **characterized in that** it is a frozen food product, preferably an ice cream product.

10. A process to produce an emulsion of an aqueous phase in a lipid phase, with improved pick-up behaviour, comprising the steps of:

    (a) providing an aqueous phase comprising a sweetener composition;
    (b) emulsifying the aqueous phase with a lipid phase such that the aqueous phase is dispersed throughout the lipid phase in the form of droplets, and
    (c) cooling the emulsion obtained in step (b),

    wherein the lipid phase of the emulsion comprises non-fatty cocoa solids and/or non-fatty milk solids and wherein the lipid phase of step b comprises tempered lipids.

11. A process according to claim 10, **characterised in that** step (b) comprises two steps:

    - a first step (b1) in which a first lipid composition and the aqueous phase are mixed under medium to high shear to produce a first emulsion, and
    - a second step (b2) in which a second lipid composition is added to the first emulsion and mixed under medium to low shear to produce a final emulsion.

12. A process according to claim 11, **characterised in that** the non-fatty cocoa solids and/or non-fatty milk solids are added to the emulsion as part of the second lipid composition in step (b2).

13. An emulsion of an aqueous phase in a lipid phase, obtainable according to the process of any of claims 10-12.

**Patentansprüche**

1.  Emulsion einer wässrigen Phase in einer Lipidphase mit einem verbesserten Aufnahmeverhalten, wobei die Lipidphase fettfreien Kakao und/oder Milchfeststoffe umfasst und die wässrige Phase eine Süßstoffzusammensetzung umfasst und in Form von Tröpfchen über die Lipidphase dispergiert ist, **dadurch gekennzeichnet, dass** die Lipidphase Lipide umfasst, die gehärtet wurden.

2.  Emulsion nach Anspruch 1, weiter **dadurch gekennzeichnet, dass** die Lipidphase einen Kristallisationsstarter umfasst.

3.  Emulsion nach Anspruch 2, **dadurch gekennzeichnet, dass** der Kristallisationsstarter ausgewählt ist aus hochschmelzenden Triacylglycerinen, partiellen Acylglycerinen, Wachsen, fraktionierten Ölen, umgeesterten Ölen, hydrierten Ölen und Mischungen davon.

4.  Emulsion nach einem der Ansprüche 1 bis 3, **dadurch gekennzeichnet, dass** die Lipidphase Lipide, die fraktioniert und/oder umgeestert wurden, vorzugsweise umgeesterte Kakaobutterstearinfraktionen umfasst.

5.  Emulsion nach einem der Ansprüche 1 bis 4, **dadurch gekennzeichnet, dass** die Lipidphase gehärtete Kakaobutter umfasst.

6.  Emulsion nach einem der vorstehenden Ansprüche, **dadurch gekennzeichnet, dass** sie umfasst:

    • von 10 bis 70 Gew.-% einer wässrigen Phase, basierend auf dem Gesamtgewicht der Emulsion,
    • von 30 bis 90 Gew.-% einer Lipidphase, basierend auf dem Gesamtgewicht der Emulsion.

7. Lebensmittelprodukt, umfassend die Emulsion nach einem der Ansprüche 1 bis 6 und weitere Lebensmittelbestandteile.

8. Lebensmittelprodukt nach Anspruch 7, **dadurch gekennzeichnet, dass** die Emulsion als eine Beschichtung und/oder als eine Füllung in dem Lebensmittelprodukt vorliegt.

9. Lebensmittelprodukt nach Anspruch 7 oder Anspruch 8, **dadurch gekennzeichnet, dass** es sich um ein Tiefkühllebensmittelprodukt, vorzugsweise ein Eiscremeprodukt handelt.

10. Verfahren zum Herstellen einer Emulsion aus einer wässrigen Phase in einer Lipidphase mit verbesserten Aufnahmeverhalten, umfassend die folgenden Schritte:

   (a) Bereitstellen einer wässrigen Phase, die eine Süßstoffzusammensetzung umfasst;
   (b) Emulgieren der wässrigen Phase mit einer Lipidphase, sodass die wässrige Phase in Form von Tröpfchen über die Lipidphase dispergiert ist, und
   (c) Kühlen der in Schritt (b) erhaltenen Emulsion,

   wobei die Lipidphase der Emulsion fettfreie Kakaofeststoffe und/oder fettfreie Milchfeststoffe umfasst und wobei die Lipidphase aus Schritt b gehärtete Lipide umfasst.

11. Verfahren nach Anspruch 10, **dadurch gekennzeichnet, dass** Schritt (b) zwei Schritte umfasst:

   - einen ersten Schritt (b1), in dem eine erste Lipidzusammensetzung und die wässrige Phase unter mittlerer bis hoher Scherung gemischt werden, um eine erste Emulsion herzustellen, und
   - einen zweiten Schritt (b2), in dem eine zweite Lipidzusammensetzung zu der ersten Emulsion gegeben und unter mittlerer bis geringer Scherung gemischt wird, um eine abschließende Emulsion herzustellen.

12. Verfahren nach Anspruch 11, **dadurch gekennzeichnet, dass** die fettfreien Kakaofeststoffe und/oder fettfreien Milchfeststoffe der Emulsion als Teil der zweiten Lipidzusammensetzung in Schritt (b2) zugegeben werden.

13. Emulsion einer wässrigen Phase in einer Lipidphase, erhältlich nach dem Verfahren nach einem der Ansprüche 10-12.

**Revendications**

1. Emulsion d'une phase aqueuse dans une phase lipidique, avec un comportement à la récupération amélioré, dans laquelle la phase lipidique comprend des matières solides de cacao et/ou des matières solides de lait non grasses, et la phase aqueuse comprend une composition édulcorante et est dispersée à travers toute la phase lipidique sous la forme de gouttelettes, **caractérisée en ce que** la phase lipidique comprend des lipides qui ont été tempérés.

2. Emulsion selon la revendication 1, **caractérisée en outre en ce que** la phase lipidique comprend un initiateur de cristallisation.

3. Emulsion selon la revendication 2, **caractérisée en ce que** l'initiateur de cristallisation est choisi parmi des triacylglycérols à point de fusion élevé, des acylglycérols partiels, des cires, des huiles fractionnées, des huiles interestérifiées, des huiles hydrogénées et des mélanges de ceux-ci.

4. Emulsion selon l'une quelconque des revendications 1 à 3, **caractérisée en ce que** la phase lipidique comprend des lipides qui ont été fractionnés et/ou interestérifiés, de préférence de fractions de stéarine de beurre de cacao interestérifiées.

5. Emulsion selon l'une quelconque des revendications 1 à 4, **caractérisée en ce que** la phase lipidique comprend du beurre de cacao tempéré.

6. Emulsion selon l'une quelconque des revendications précédentes, **caractérisée en ce qu'**elle comprend :

- de 10 à 70 % en poids de phase aqueuse, sur la base du poids total de l'émulsion,
- de 30 à 90 % en poids de phase lipidique, sur la base du poids total de l'émulsion.

7. Produit alimentaire comprenant l'émulsion selon l'une quelconque des revendications 1 à 6 et d'autres ingrédients alimentaires.

8. Produit alimentaire selon la revendication 7, **caractérisé en ce que** l'émulsion est présente sous la forme d'un revêtement et/ou d'une garniture dans ledit produit alimentaire.

9. Produit alimentaire selon la revendication 7 ou la revendication 8, **caractérisé en ce qu'**il s'agit d'un produit alimentaire congelé, de préférence un produit de type crème glacée.

10. Procédé de production d'une émulsion d'une phase aqueuse dans une phase lipidique, avec un comportement à la récupération amélioré, comprenant les étapes consistant à :

(a) fournir une phase aqueuse comprenant une composition édulcorante ;
(b) émulsifier la phase aqueuse avec une phase lipidique de telle sorte que la phase aqueuse soit dispersée à travers la phase lipidique sous la forme de gouttelettes, et
(c) refroidir l'émulsion obtenue à l'étape (b),

dans lequel la phase lipidique de l'émulsion comprend des matières solides de cacao non grasses et/ou des matières solides de lait non grasses et dans lequel la phase lipidique de l'étape b comprend des lipides tempérés.

11. Procédé selon la revendication 10, **caractérisé en ce que** l'étape (b) comprend deux étapes :

- une première étape (b1) dans laquelle une première composition lipidique et la phase aqueuse sont mélangées sous cisaillement moyen à élevé pour produire une première émulsion, et
- une seconde étape (b2) dans laquelle une seconde composition lipidique est ajoutée à la première émulsion et mélangée sous cisaillement moyen à faible pour produire une émulsion finale.

12. Procédé selon la revendication 11, **caractérisé en ce que** les matières solides de cacao non grasses et/ou les matières solides de lait non grasses sont ajoutées à l'émulsion en tant que partie de la seconde composition lipidique à l'étape (b2).

13. Emulsion d'une phase aqueuse dans une phase lipidique, pouvant être obtenue selon le procédé de l'une quelconque des revendications 10 à 12.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5468509 A
- WO 0195737 A
- US 6174555 B
- US 20060121164 A
- EP 1875810 A
- WO 2012041523 A